# DEMANDE DE BREVET EUROPEEN

(11) **EP 2 442 019 A2**
(43) Date de publication de la demande: **18.04.2012**
(21) Numéro de dépôt: 11184730.7
(22) Date de dépôt: 11.10.2011
(51) Int. Cl.: F21V 19/00, B60Q 1/00, F21Y 101/02, F21W 101/02, F21V 15/01

(54) **Dispositif d'éclairage et/ou de signalisation de véhicule automobile**

(30) Priorité: 14.10.2010 FR 1058382
(71) Demandeur: VALEO VISION, 93012 Bobigny (FR)
(72) Inventeur: Hermitte, Michel, 49400 Angers (FR); Patrizi, Stéphane, 49700 Doue la Fontaine (FR)

(57) **Abrégé**

L'invention concerne un dispositif d'éclairage et/ou de signalisation (1) de véhicule automobile, comportant:

- un module lumineux (2) comprenant au moins une LED (3) pour produire un faisceau lumineux,
- un boîtier (4) comprenant:
i. un élément intermédiaire (5) de boîtier,
ii. un élément amovible (6) de boîtier agencé pour être monté de manière amovible sur l'élément intermédiaire de boîtier, cet élément amovible de boîtier étant agencé pour porter le module lumineux.

## Description

L'invention concerne notamment un dispositif d'éclairage et/ou de signalisation de véhicule automobile.

Il existe un besoin pour permettre une réparation simple de projecteurs de véhicule automobile, notamment en permettant, sans pour autant accroître la complexité du projecteur, un accès aisé à des composants à l'intérieur du boîtier du projecteur, pour changer ou réparer ces composants.

L'invention a trait plus particulièrement à un dispositif d'éclairage et/ou de signalisation de véhicule automobile, qui utilise une ou plusieurs LED (Diode électroluminescentes). Ce type de source de lumière, qui nécessite la présence de cartes électroniques, ne peut pas être remplacé à la manière de lampes classiques. En effet, une telle lampe classique peut être assemblée avec un porte-lampe facilement fixé et retiré du boîtier, ce qui n'est pas le cas a priori pour des dispositifs à LED.

L'invention a pour objet un dispositif d'éclairage et/ou de signalisation de véhicule automobile, comportant:
- un module lumineux comprenant au moins une LED pour produire un faisceau lumineux,
- un boîtier comprenant:
   i. un élément intermédiaire de boîtier,
   ii. un élément amovible de boîtier agencé pour être monté de manière amovible sur l'élément intermédiaire de boîtier, cet élément amovible de boîtier étant agencé pour porter le module lumineux.

Grâce à l'invention, il est possible d'accéder facilement à un composant à l'intérieur du boîtier, simplement en retirant l'élément amovible de boîtier. Puis lorsque le composant a été changé ou réparé, le boîtier peut être aisément refermé.

Le dispositif selon l'invention est relativement simple et peu coûteux.

En outre, il est possible de disposer dans le boîtier un dispositif de refroidissement tel qu'un ventilateur.

De préférence, le dispositif comporte une glace fixée, par exemple à l'aide de clips et de colle, sur l'élément intermédiaire de boîtier de manière à fermer le boîtier.

Cette glace est réalisée de préférence en matière plastique transparente, par exemple en PC ou PMMA.

Dans un exemple de mise en oeuvre de l'invention, l'élément amovible de boîtier forme une paroi arrière du boîtier lorsque cet élément amovible de boîtier est monté sur l'élément intermédiaire de boîtier.

Avantageusement le boîtier présente une face arrière, et l'élément amovible de boîtier s'étend sensiblement sur au moins la moitié de la superficie de cette face arrière, et notamment sur toute la face arrière du boîtier. Ceci permet notamment d'avoir un accès aisé aux composants à l'intérieur du boîtier.

Le cas échéant, l'élément amovible de boîtier est réalisé en matière plastique, notamment par moulage, par exemple par moulage par injection.

Dans un exemple de mise en oeuvre de l'invention, l'élément amovible de boîtier porte au moins une carte électronique de préférence connectée à la LED pour la commander.

Cette carte électronique peut éventuellement supporter ou non les Leds ainsi que des composants électroniques pour gérer leur alimentation. Cette carte peut être, le cas échéant, liée au système optique.

Si on le souhaite, l'élément amovible de boîtier porte au moins un organe de ventilation et/ou de dissipation thermique agencé pour évacuer de la chaleur de l'intérieur du boîtier vers l'extérieur.

L'élément amovible de boîtier peut porter en outre un connecteur électrique, un dispositif de réglage en orientation du faisceau lumineux, un driver, un ventilateur, un capot complémentaire...

Dans un exemple de mise en oeuvre de l'invention, le module lumineux est agencé pour produire un faisceau code et/ou un faisceau route, et/ou un feu de jour (DRL), et/ou un indicateur de direction et/ou une lampe ville et/ou un side marker et/ou un antibrouillard.

Avantageusement le module lumineux comporte au moins une lentille à travers laquelle passe de la lumière provenant de la LED.

Le cas échéant, le module lumineux comporte au moins un réflecteur agencé pour réfléchir de la lumière provenant de la LED.

De préférence, l'élément intermédiaire de boîtier et l'élément amovible de boîtier comportent chacun un rebord agencé pour coopérer avec le rebord de l'autre élément de manière à former une gorge d'étanchéité.

Par exemple, la gorge peut présenter une forme annulaire, à savoir cette gorge fait par exemple tout le tour de l'élément amovible de boîtier.

Avantageusement le dispositif comporte un joint d'étanchéité disposé dans ladite gorge d'étanchéité.

De préférence, l'élément intermédiaire de boîtier comporte au moins un organe de guidage agencé pour permettre le guidage de l'élément amovible de boîtier lorsque celui-ci est monté sur l'élément intermédiaire de boîtier.

Dans un exemple de mise en oeuvre de l'invention, l'organe de guidage comporte au moins un rail disposé à l'intérieur du boîtier.

Ce rail permet notamment de re- positionner le système complet, notamment le réglage du faisceau lumineux. Ce rail permet en outre d'améliorer la rigidité de l'ensemble du projecteur une fois assemblé. Le fait de mettre le ou les rail(s) sensiblement à la verticale du système de réglage assure la stabilité du faisceau lumineux.

Si on le souhaite, l'élément intermédiaire de boîtier forme une face latérale du boîtier, cet élément intermédiaire de boîtier présentant notamment une forme annulaire.

Avantageusement l'élément intermédiaire de boîtier et l'élément amovible de boîtier sont agencés pour être assemblés par vissage, ou par encliquetage, ou par agrafes amovibles.

L'élément intermédiaire de boîtier peut être réalisé en matière plastique, notamment par moulage, de préférence par moulage par injection.

De préférence, l'élément intermédiaire de boîtier comporte au moins un organe de fixation, par exemple de type patte agencée pour une mise en place (isostatisme) et un orifice, agencé pour permettre la fixation du boîtier sur un châssis du véhicule.

Le dispositif peut comporter une ou plusieurs sources de lumière formées exclusivement par une ou plusieurs LED, sans présence par exemple de lampe à filament ou à décharge dans le boîtier. En variante, le dispositif comporte au moins une lampe à filament ou à décharge.

L'invention a également pour objet un procédé pour réparer un dispositif d'éclairage et/ou de signalisation de véhicule automobile tel que défini ci-dessus, comportant les étapes suivantes:
- séparer l'élément intermédiaire de boîtier de l'élément amovible de boîtier de manière à avoir un accès au module lumineux,
- réparer ou changer le module lumineux,
- replacer l'élément amovible de boîtier sur l'élément intermédiaire de boîtier.

Ainsi l'invention permet de changer simplement un module ou composant défectueux monté dans le boîtier, sans avoir à sacrifier une partie du boîtier ou la totalité de celui-ci.

L'invention a encore pour objet un procédé pour réparer un dispositif d'éclairage et/ou de signalisation de véhicule automobile tel que défini ci-dessus, comportant les étapes suivantes:
- séparer l'élément intermédiaire de boîtier de l'élément amovible de boîtier,
- assembler l'élément amovible de boîtier avec un nouvel élément intermédiaire de boîtier, le cas échéant avec une glace fixée sur ce nouvel élément intermédiaire de boîtier,
- monter le dispositif ainsi formé sur le véhicule

L'invention permet ainsi la réparation consistant à remplacer seulement la glace et l'élément intermédiaire de boîtier en cas de faible choc qui aurait endommagé seulement cette glace et/ou cet élément intermédiaire de boîtier, sans endommager le module lumineux ou l'élément amovible de boîtier.

L'invention pourra être mieux comprise à la lecture de la description détaillée qui va suivre, d'un exemple de mise en oeuvre non limitatif de l'invention, et à l'examen du dessin annexé, sur lequel:
- la figure 1 représente, schématiquement et partiellement, en perspective, un dispositif selon un exemple de l'invention,
- la figure 2 représente, schématiquement et partiellement, en perspective et en éclaté, différents éléments du dispositif de la figure 1,
- la figure 3 est une vue en coupe suivant III-III du dispositif de la figure 1, et
- la figure 4 représente, schématiquement et partiellement, l'arrière du dispositif de la figure 1.

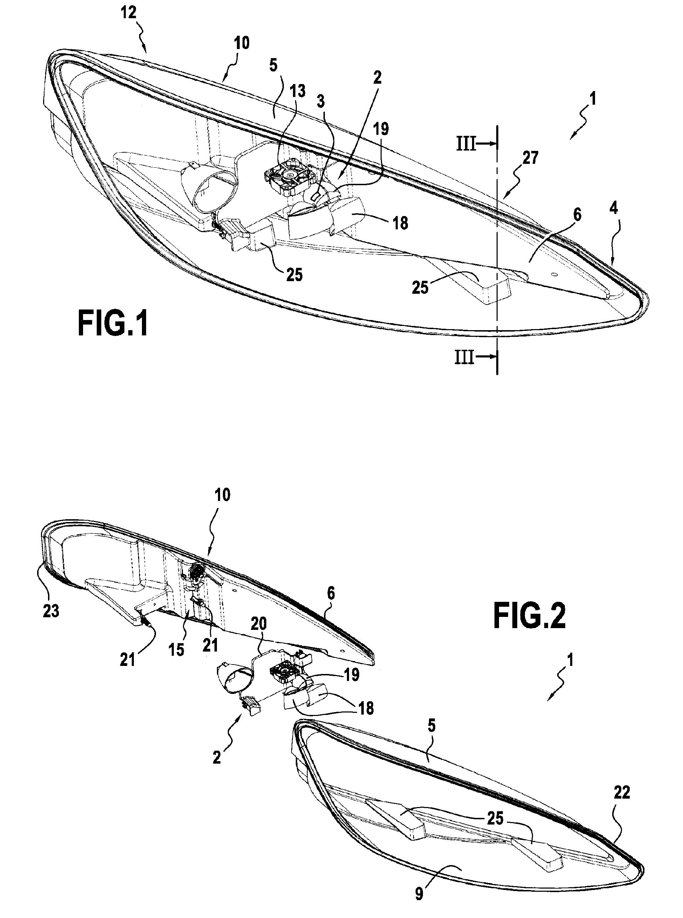

On a représenté sur les figures 1 à 4 un dispositif 1 d'éclairage et/ou de signalisation de véhicule automobile conforme à un exemple de mise en oeuvre de l'invention.

Ce dispositif 1 comporte:
- un module lumineux 2 comprenant au moins une LED 3 pour produire un faisceau lumineux,
- un boîtier 4 comprenant:
   i. un élément intermédiaire 5 de boîtier,
   ii. un élément amovible 6 de boîtier agencé pour être monté de manière amovible sur l'élément intermédiaire 5 de boîtier, cet élément amovible de boîtier étant agencé pour porter le module lumineux 2.

Une glace 9 est fixée sur l'élément intermédiaire 5 de boîtier de manière à fermer le boîtier 4.

Cette glace 9 est réalisée de préférence en matière plastique transparente, par exemple en PC ou PMMA.

Dans l'exemple décrit, l'élément amovible 6 de boîtier forme une paroi arrière 10 du boîtier 4 lorsque cet élément amovible 6 de boîtier est monté sur l'élément intermédiaire 5 de boîtier.

Le boîtier 4 présente une face arrière 12, et l'élément amovible 6 de boîtier s'étend sensiblement sur toute la face arrière 12 du boîtier. Dans l'exemple décrit, la paroi arrière 10 formée par l'élément amovible 6 et la face arrière 12 du boîtier se confondent sensiblement.

L'élément amovible 6 de boîtier est réalisé en matière plastique, notamment par moulage, par exemple par moulage par injection.

Il peut par exemple être ajouté des fibres de verre pour renforcer l'élément amovible 6.

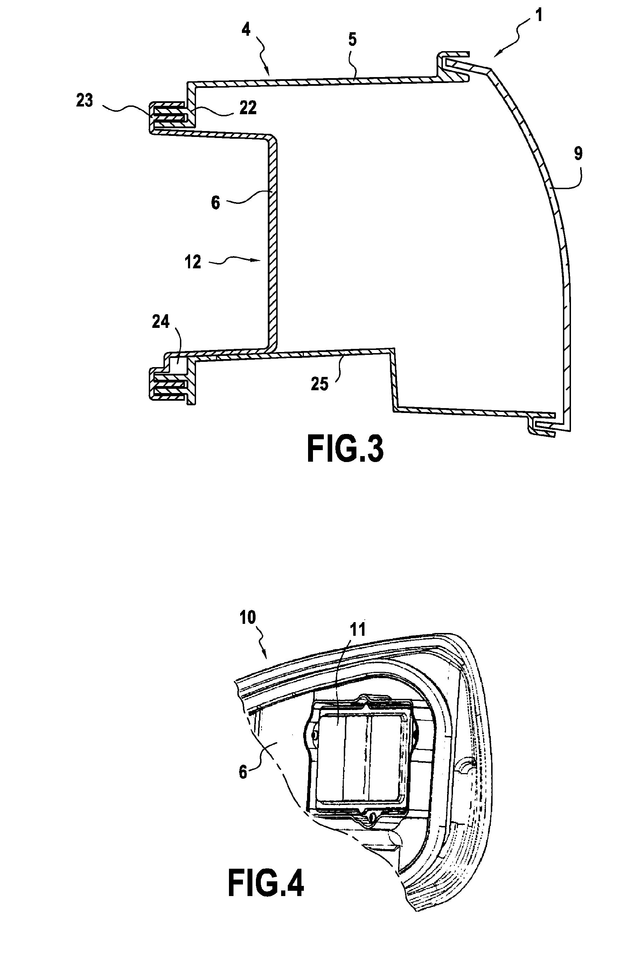

Dans l'exemple considéré, l'élément amovible 6 de boîtier porte au moins une carte électronique 11 connectée à la LED pour la commander, cette carte étant disposé à l'extérieur du boîtier 4, sur la face arrière 10 (voir figure 4).

L'élément amovible 6 de boîtier porte également :
- un organe de ventilation électrique 13 pour le refroidissement du ou des modules à LED,
- un ou plusieurs connecteurs électriques,
- un dispositif 15 de réglage en orientation du faisceau lumineux.

Le module lumineux 2 est agencé pour produire un faisceau code et/ou un faisceau route.

Ce module lumineux 2 comporte deux lentilles 18 côte à côte, et des réflecteurs 19.

Ce module 2 comprend en outre une platine de montage 20 agencée pour être montée sur l'élément amovible 6 de boîtier, via des tiges de réglage 21 du dispositif 15 (voir figure 2).

L'élément intermédiaire 5 de boîtier et l'élément amovible 6 de boîtier comportent chacun un rebord 22, respectivement 23, agencé pour coopérer avec le rebord de l'autre élément de manière à former une gorge d'étanchéité 24 (voir figure 3).

Par exemple, la gorge 24 peut présenter une forme annulaire, à savoir cette gorge fait par exemple tout le tour de l'élément intermédiaire 5 de boîtier.

Un joint d'étanchéité peut être disposé dans ladite gorge d'étanchéité.

L'élément intermédiaire 5 de boîtier comporte deux organes de guidage 25 agencés pour permettre le guidage de l'élément amovible 6 de boîtier lorsque celui-ci est monté sur l'élément intermédiaire 5 de boîtier.

Chaque organe de guidage 25 comporte un rail disposé à l'intérieur du boîtier 4.

Ces rails présentent avantageusement, dans l'exemple décrit, une forme de caisson, ce qui permet leur démoulage par injection.

L'élément intermédiaire 5 de boîtier forme une face latérale 27 du boîtier, cet élément intermédiaire de boîtier présente notamment une forme annulaire.

L'élément intermédiaire 5 de boîtier et l'élément amovible 6 de boîtier sont agencés pour être assemblés par vissage.

L'élément intermédiaire 5 de boîtier est réalisé en matière plastique, notamment par moulage, de préférence par moulage par injection.

Cet élément intermédiaire 5 de boîtier comporte au moins un organe de fixation agencé pour permettre la fixation du boîtier sur un châssis du véhicule.

## Revendications

1. Dispositif d'éclairage et/ou de signalisation (1) de véhicule automobile, comportant:
- un module lumineux (2) comprenant au moins une LED (3) pour produire un faisceau lumineux,
- un boîtier (4) comprenant:
i. un élément intermédiaire (5) de boîtier,
ii. un élément amovible (6) de boîtier agencé pour être monté de manière amovible sur l'élément intermédiaire de boîtier, cet élément amovible de boîtier étant agencé pour porter le module lumineux.

2. Dispositif selon la revendication précédente, **caractérisé par le fait qu'**il comporte une glace (9) fixée sur l'élément intermédiaire de boîtier de manière à fermer le boîtier.

3. Dispositif selon l'une des revendications précédentes, **caractérisé par le fait que** l'élément amovible (6) de boîtier forme une paroi arrière (10) du boîtier lorsque cet élément amovible de boîtier est monté sur l'élément intermédiaire de boîtier.

4. Dispositif selon l'une des revendications précédentes, le boîtier présentant une face arrière (12), **caractérisé par le fait que** l'élément amovible (6) de boîtier s'étend sensiblement sur au moins la moitié de la superficie de cette face arrière, et notamment sur toute la face arrière du boîtier.

5. Dispositif selon l'une des revendications précédentes, **caractérisé par le fait que** l'élément amovible de boîtier porte au moins une carte électronique (11) de préférence connectée à la LED pour la commander.

6. Dispositif selon l'une des revendications précédentes, **caractérisé par le fait que** le module lumineux (2) est agencé pour produire un faisceau code et/ou un faisceau route.

7. Dispositif selon l'une des revendications précédentes, **caractérisé par le fait que** l'élément intermédiaire (5) de boîtier et l'élément amovible (4) de boîtier comportent chacun un rebord (22, 23) agencé pour coopérer avec le rebord de l'autre élément de manière à former une gorge d'étanchéité (24).

8. Dispositif selon l'une des revendications précédentes, **caractérisé par le fait que** l'élément intermédiaire de boîtier comporte au moins un organe de guidage (25) agencé pour permettre le guidage de l'élément amovible de boîtier lorsque celui-ci est monté sur l'élément intermédiaire de boîtier.

9. Dispositif selon la revendication précédente, **caractérisé par le fait que** l'organe de guidage comporte au moins un rail (25) disposé à l'intérieur du boîtier.

10. Dispositif selon l'une des revendications précédentes, **caractérisé par le fait que** l'élément intermédiaire de boîtier et l'élément amovible de boîtier sont agencés pour être assemblés par vissage.

11. Dispositif selon l'une des revendications précédentes, **caractérisé par le fait qu'**il comporte une ou plusieurs sources de lumière formées exclusivement par une ou plusieurs LED (3).

12. Procédé pour réparer un dispositif d'éclairage et/ou de signalisation de véhicule automobile selon l'une des revendications précédentes, comportant les étapes suivantes:
- séparer l'élément intermédiaire de boîtier de l'élément amovible de boîtier de manière à avoir un accès au module lumineux,
- réparer ou changer le module lumineux,
- replacer l'élément amovible de boîtier sur l'élément intermédiaire de boîtier.

13. Procédé pour réparer un dispositif d'éclairage et/ou de signalisation de véhicule automobile selon l'une des revendications précédentes, comportant les étapes suivantes:
- séparer l'élément intermédiaire de boîtier de l'élément amovible de boîtier,
- assembler l'élément amovible de boîtier avec un nouvel élément intermédiaire de boîtier, le cas échéant avec une glace fixée sur ce nouvel élément intermédiaire de boîtier,
- monter le dispositif ainsi formé sur le véhicule.
